# EUROPÄISCHE PATENTANMELDUNG

(11) **EP 1 273 985 A2**
(43) Veröffentlichungstag der Anmeldung: **08.01.2003**
(21) Anmeldenummer: 02014329.3
(22) Anmeldetag: 27.06.2002
(51) Int. Cl.: G05B 19/042, G05B 19/418

(54) **Verfahren und Vorrichtung zur Bearbeitung der Programmfunktionen eines Automatisierungssystems**

(30) Priorität: 29.06.2001 DE 10131538
(71) Anmelder: SIEMENS AKTIENGESELLSCHAFT, 80333 München (DE)
(72) Erfinder: Beck, Hans-Joachim, 76287 Rheinstetten (DE); Becker, Peter, 76571 Gaggenau (DE)

(57) **Zusammenfassung**

Die Erfindung betrifft ein Verfahren zur Bearbeitung der Programmfunktionen eines Automatisierungssystems (AS), bei dem die einer zu steuernden Anlage (ANL) zugeordneten Teilprogramme und/oder Systemfunktionen (A; A1, A2; Ax1, Ax2, Ay1, Ay2, Ay3, Ay4) Systemressourcen (SR) im Automatisierungssystem (AS) belegen. Die mit den Teilprogrammen im Betrieb durchgeführten Systemfunktionen oder Auslösebausteine (A; A1, A2; Ax1, Ax2, Ay1, Ay2, Ay3, Ay4) erhalten einen Aktualparameter (CMP_ID), der eine logische Verknüpfung zwischen den durch das Teilprogramm repräsentierten Systemfunktionen (A; A1, A2; Ax1, Ax2, Ay1, Ay2, Ay3, Ay4) und den dadurch belegten Systemressourcen (SR) bis zum Beenden der Systemfunktion (A; A1, A2; Ax1, Ax2, Ay1, Ay2, Ay3, Ay4) herstellt, und nach einem Erstlauf eines bearbeiteten Teilprogramms werden alle diesbezüglichen Systemressourcen (SR) im Automatisierungsgerät durch eine Resetfunktion (RESET) freigegeben.

## Beschreibung

Die Erfindung betrifft ein Verfahren und eine Vorrichtung zur Bearbeitung der Programmfunktionen eines Automatisierungssystems während des Betriebs eines programmierbaren Automatisierungsgeräts, insbesondere für Anlagen mit zu steuernden dezentralen Teilanlagen, nach dem Oberbegriff des Hauptanspruchs.

In der praktischen Anwendung der Automatisierungssysteme werden einem computergesteuerten Automatisierungsgerät mehrere zu steuernde Teilanlagen, z. B. Fertigungsinseln einer Produktionslinie, zugeordnet. Diese Teilanlagen werden durch Teilprogramme innerhalb des gesamten Programms für eine Ablaufsteuerung im Automatisierungsgerät repräsentiert.

Beispielsweise in Fehlersituationen, bei Wartungsarbeiten oder bei Optimierungsprozeduren für das Programm werden diese Teilprogramme oftmals im laufenden Betrieb mit neuen Funktionen beaufschlagt, d. h. mit neuen Programmfunktionen oder auch mit einem überarbeiteten Teilprogramm überschrieben bzw. überladen. Hierbei sollte gewährleistet sein, dass das Überladen dieser Teilprogramme rückwirkungsfrei zu den anderen Teilprogrammen erfolgt, d. h., dass andere Teilprogramme nicht beeinträchtigt werden sollten. Die Bedingungen für dieses so genannte Änderungsladen von Programmteilen werden üblicherweise anwenderspezifisch festgelegt.

In der Automatisierungstechnik ist es ferner üblich, dass Systemfunktionen vorhanden sind, die eine asynchrone Datenbearbeitung bzw. -übertragung ermöglichen und beispielsweise das Versenden und Empfangen von Daten zwischen dem zentralen Automatisierungsgerät und der abgesetzten (remoten) Teilanlage betreffen. Mit einem Systemfunktionsaufruf kann hier eine Sendefunktion gestartet werden und weitere Aufrufe bzw. zyklische Abfragen (Pollen) quittieren die Rückmeldung der remoten Teilanlage, dass die Sendedaten empfangen wurden.

In der Regel werden mit dem Start einer solchen asynchronen Systemfunktion dynamisch Systemressourcen im Automatisierungsgerät belegt, die erst mit dem Erkennen des Funktionsendes durch das Anwenderprogramm wieder freigegeben werden. Die notwendige logische Verknüpfung zwischen dem beschriebenen Systemaufruf und der Systemressource erfolgt üblicherweise durch ein funktionsgeprägtes Identifikationssignal, wie z. B. die binäre Adresse der remoten Teilanlage. Andererseits sind auch synchrone Systemfunktionen anwendbar, die die Systemressourcen wie zuvor beschrieben belegen und dann allerdings im Unterschied zum asynchronen Verfahren diese Systemressourcen erst nach einem vorgegebenen Zeitraum wieder freigeben.

Alle belegten Systemressourcen dieser Art werden prinzipiell nur dann freigegeben, wenn das Funktionsende durch das Anwenderprogramm erkannt wurde oder das gesamte Programm mit einem Neustart wieder initialisiert wird. Wird ein modifiziertes Teilprogramm, wie eingangs erwähnt, überladen, kann es hierbei zu der Situation kommen, dass eine begonnene asynchrone Systemfunktion noch nicht beendet wurde und die entsprechende Systemressource nicht freigegeben ist.

In dem neu anlaufenden Teilprogramm kann es dann zu nachfolgend aufgeführten Zuständen kommen. Die nicht abgeschlossene Systemfunktion wird im neuen Teilprogramm nicht mehr aufgerufen und ein Funktionsende kann nicht signalisiert werden, d. h., die belegte Systemressource bleibt belegt und ist für das Anwenderprogramm nicht mehr nutzbar. Multiplizieren sich diese Vorgänge dadurch, dass mehrere Systemfunktionen betroffen sind oder Überladevorgänge mehrmals erfolgen, kann es zur Verlangsamung bis zur Funktionsunfähigkeit der Systemfunktionen kommen, da die hierdurch belegten Systemressourcen nicht mehr genutzt werden können. Weiterhin kann es auch zu Falschaussagen an bestimmten Visualisierungsmitteln des Automatisierungssystems kommen, die die Zuverlässigkeit des Systems erheblich beeinträchtigen.

Weiterhin ist es eventuell möglich, dass Funktionen existieren, deren Funktionalität ganz bestimmte Einzelschritte voraussetzten, bis diese Funktion beendet ist und die Systemressource freigegeben werden kann. Z. B. meldet ein Alarmbaustein einer Teilanlage in einer festen Sequenz immer zuerst ein kommendes und dann ein gehendes Ereignis. Dies bedeutet, wenn diese Funktion nach dem Überladen des Programms ein kommendes Ereignis gemeldet hat, kann das neue Programm aufgrund des nicht erfolgten gehenden Ereignisses ein kommendes Ereignis nicht melden und somit das zentrale Automatisierungsgerät eine Alarmsituation nicht erkennen.

Um die zuvor beschriebenen Situationen zu beherrschen, ist es eigentlich erforderlich, dass im Erstlauf des neuen Teilprogramms die betroffenen Systemfunktionen anwenderspezifisch beendet, z. B. durch Absenden abgehender Meldungen, und somit die zugehörigen Systemressourcen freigegeben werden. Eine Lösung dieses Problems wurde bisher wegen des sehr hohen Aufwandes auf der Anwenderseite oft nicht angestrebt, so dass die belegten Systemressourcen erst mit Neustart aller Teilprogramme, d. h. bei einem kompletten Anlagenstillstand, prinzipiell freigegeben werden oder es wurde gar ein Fehlverhalten nach dem Überladen eines Teilprogramms in Kauf genommen.

Der Erfindung liegt daher die Aufgabe zugrunde, ein Verfahren und eine Vorrichtung zur Bearbeitung der Programmfunktionen eines programmgesteuerten Automatisierungssystems dadurch weiterzubilden, dass während des Betriebs eines programmierbaren Automatisierungsgeräts mit zu steuernden dezentralen Teilanlagen diese auf einfache Weise mit modifizierten oder neuen Programmen überladen werden können, ohne den Betrieb zu beeinträchtigen.

Gemäß der Erfindung wird ein Verfahren zur Bearbeitung der Programmfunktionen eines programmgesteuerten Automatisierungssystems der eingangs angegebenen Art während des Betriebs eines programmierbaren Automatisierungsgeräts, insbesondere mit zu steuernden dezentralen Teilanlagen oder Teilfunktionen, in vorteilhafter Weise mit den kennzeichnenden Merkmalen des Hauptanspruchs weitergebildet.

Hierbei erhalten die mit den Teilprogrammen im Betrieb des Automatisierungssystems durchgeführten Systemfunktionen einen Aktualparameter, der eine logische Verknüpfung zwischen der durch das Teilprogramm repräsentierten Teilanlage oder -funktion mit den im Automatisierungsgerät durch die Systemfunktion belegten Systemressourcen bis zum Beenden der Systemfunktion herstellt und somit ein so genanntes Aufsynchronisieren der eventuell geänderten Teilprogramme mit den Teilanlagen oder -funktionen im Betrieb ermöglicht. Nach einem Erstlauf eines so bearbeiteten Teilprogramms können dann alle diesbezüglichen Systemressourcen im Automatisierungsgerät durch einen Reset freigegeben werden.

In vorteilhafter Weise kann hierbei der Aktualparameter entweder mit einem separaten Funktionsbaustein erzeugt werden, der jeweils einer Systemfunktion zugeordnet ist, oder ein Aktualparameter wird allen Systemfunktionen im Automatisierungsgerät zugeordnet.

Gemäß einer weiteren Ausführungsform kann als Aktualparameter auch ein bereits im Automatisierungsgerät vorhandener Funktionsbaustein herangezogen werden, wobei eine Markierfunktion generiert wird, die eine logische Verknüpfung zwischen dem bereits vorhandenen Baustein, dem Teilprogramm und den belegten Systemressourcen im Automatisierungsgerät herstellt.

Es ist weiterhin auch vorteilhaft, wenn im Automatisierungsgerät eine Auskunftsfunktion generiert wird, mit der der Bearbeitungszustand jeder Systemfunktion im Betrieb überwacht werden kann und insbesondere alle nicht beendeten Systemfunktionen über den existierenden Aktualparameter identifiziert werden. Abhängig vom Zustand der jeweiligen Systemfunktion kann der Anwender dann einzelne Funktionen gezielt in einen definierten Zustand bringen, z. B. durch Senden einer abgehenden Meldung, bevor diese sich selbst beendet oder durch die Resetfunktion freigegeben wird.

Die zuvor beschriebenen erfinderischen Lösungen können auf einfache Weise in einem Software- oder Firmware-Baustein eines programmierbaren Mikroprozessors im Automatisierungsgerät gemäß der weiteren Unteransprüche realisiert werden.

Die Erfindung wird anhand des in der Zeichnung dargestellten Ausführungsbeispiels der Programmbausteine eines Automatisierungssystems erläutert. Es zeigen:
- Figur 1: ein Blockschaltbild eines Automatisierungssystems zur Steuerung einer Anlage oder eines Prozesses,
- Figur 2a und 2b: eine schematische Darstellung der Programmbausteine eines Automatisierungssystems bei einem Überladen eines modifizierten Teilprogramms in einer an sich bekannten Art und Weise und
- Figur 3: eine schematische Darstellung der Programmbausteine bei einem Überladen eines Teilprogramms mit einem Aktualparameter und einer Resetfunktion nach der Erfindung.

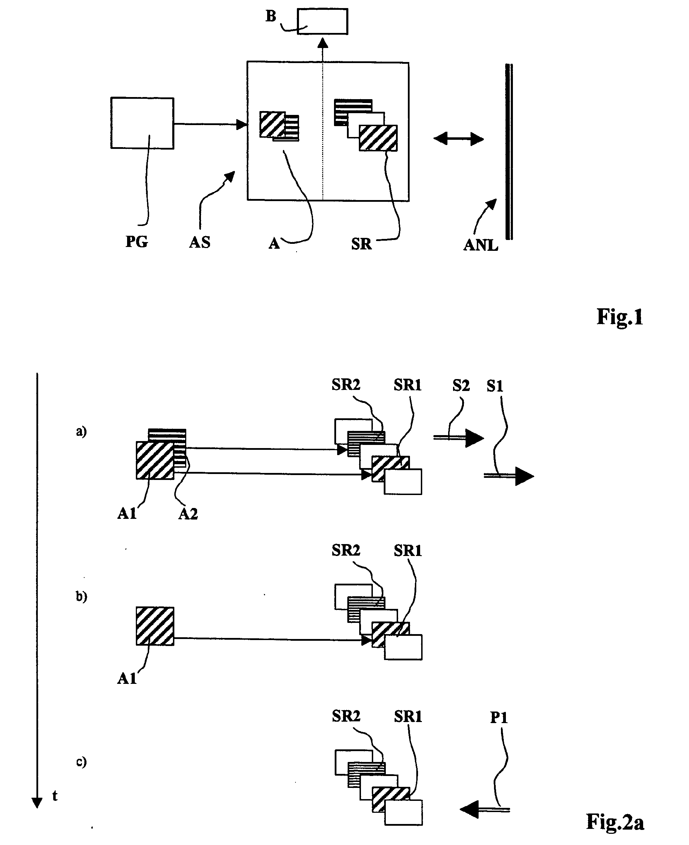

Aus Figur 1 ist schematisch ein Automatisierungssystem AS zur Steuerung einer Anlage ANL, beispielsweise einer beliebigen Fertigungsstraße, zu entnehmen. Die computerisierten Bausteine des Automatisierungssystems AS werden mit einem Programmiergerät PG mit entsprechenden Programmen bedient und die Zustände und Funktionen der zu steuernden Anlage ANL und der Steuerung selbst können auf einem Beobachtungsmittel B vom Anwender verfolgt werden.

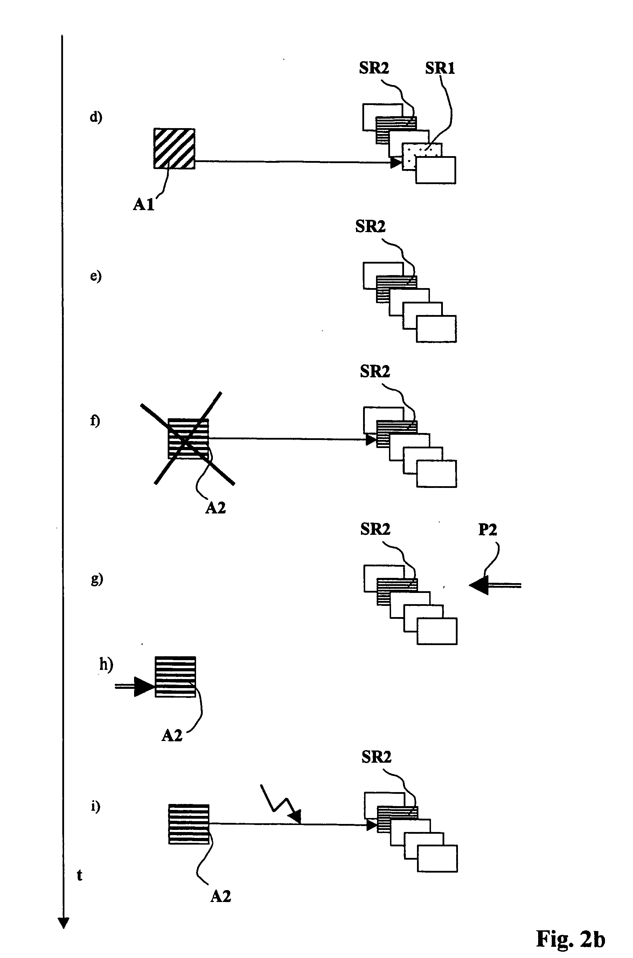

Das Automatisierungssystem AS nach der Figur 1 weist zum einen einen dem Programmiergerät PG zugeordneten Teil auf, in dem eventuell in speicherprogrammierbarer Form gebildete Auftrags- und Auslösebausteine A definiert werden können, und zum anderen einen der Anlage ANL zugewandten Teil, in dem die dadurch belegten Systemressourcen SR gebildet sind. Bei der Änderung und neuen Überladung von Teilprogrammen im Automatisierungssystem AS entsteht dabei, wie in der Beschreibungseinleitung erwähnt, häufig das Problem der Synchronisierung der Auftrags- und Auslösebausteine A mit den belegten Systemressourcen SR, die insbesondere aufgrund einer asynchronen Kommunikation mit der Anlage ANL zu fehlerhaften Meldungen oder zur Verlangsamung des Programmablaufs führen können. In der Darstellung nach Figur 2a und daran anschließend Figur 2b ist in verschiedenen Stadien a) bis i) der Ablauf der Aktionen zur Überladung eines Teilprogramms in einem Automatisierungssystem AS über der Zeit t in einer bisher bekannten Weise ersichtlich. In der Darstellung sind jeweils links schematische Blöcke gezeigt, die beispielhaft angegebene Auslösebausteine A1 und A2 für bestimmte Systemfunktionen eines hier nicht weiter zu erläuternden ersten Teilprogramms zum Betrieb eines Automatisierungssystems AS der in der Beschreibungseinleitung erwähnten Art symbolisieren sollen. Die Auslösebausteine A1 und A2 belegen dabei, durch Pfeile symbolisiert, bestimmte Systemressourcen SR1 und SR2 des Automatisierungssystems, die mit Blöcken in einer entsprechenden Schraffierung kenntlich gemacht sind.

Weiterhin sind hier noch, jeweils im rechten Teil, schematisch bestimmte Aktionen angegeben, die beispielsweise aus vorgegebenen synchronen oder asynchronen Sende-- und Empfangsroutinen S1, S2 bzw. P1 und P2 während der Kommunikation mit der zu steuernden Anlage ANL oder dem Prozess bestehen und hierbei bestimmte zu steuernde oder zu detektierende Ereignisse betreffen.

In a) soll gezeigt werden, dass mit einer ersten Aktion die Auslösebausteine A1 und A2 aktiviert werden und dabei jeweils Systemressourcen SR1 und SR2 im Automatisierungssystem AS, beispielsweise zum Aufruf S1 und S2 der abgesetzten remoten Partner, z. B. eine Fertigungsinsel einer Produktionsanlage ANL, belegt werden.

Mit b) wird für den Auslösebaustein A1 eine Abfrage, z. B. nach einem bestimmten Zustandssignal, ein so genanntes Pollen gestartet und in c) ist die Antwort P1 auf diese Abfrage angegeben, so dass nach d) der Auslösebaustein A1 beendet und die Systemressource SR1 freigegeben wird.

Aus e) ist dann ersichtlich, dass allerdings dann die Systemressource SR2 immer noch belegt ist, auch wenn nach f) der Auslösebaustein A2 freigegeben wird, da innerhalb des bisher beschriebenen Zyklus beispielsweise eine asynchrone Systemfunktion, hier Pollen des Auslösebausteins A2, nicht beendet wurde. Die nach g) eintreffende Antwort P2 kann dann nicht mehr zur Freigabe der Systemressource SR2 führen.

Mit der Aktion h) soll hier symbolisch angegeben werden, dass der Auslösebaustein A2 mit dem, mit einem Pfeil symbolisch angegeben, Überladen eines modifizierten Teilprogramms neu geladen wird. Bei einem ersten Aufruf des Auslösebausteins A2 nach der Aktion i) wird dieser zwar wieder aktiviert, er bezieht sich aber auf eine immer noch von der vorherigen Aktion belegte Systemressource SR2, so dass es hier zu Fehlfunktionen kommen kann. Um diese Fehlfunktion auszuschließen, ist es nach dem bekannten Verfahren notwendig, das gesamte Programm im Automatisierungssystem neu zu initialisieren, also einen vollständigen Neustart herbeizuführen.

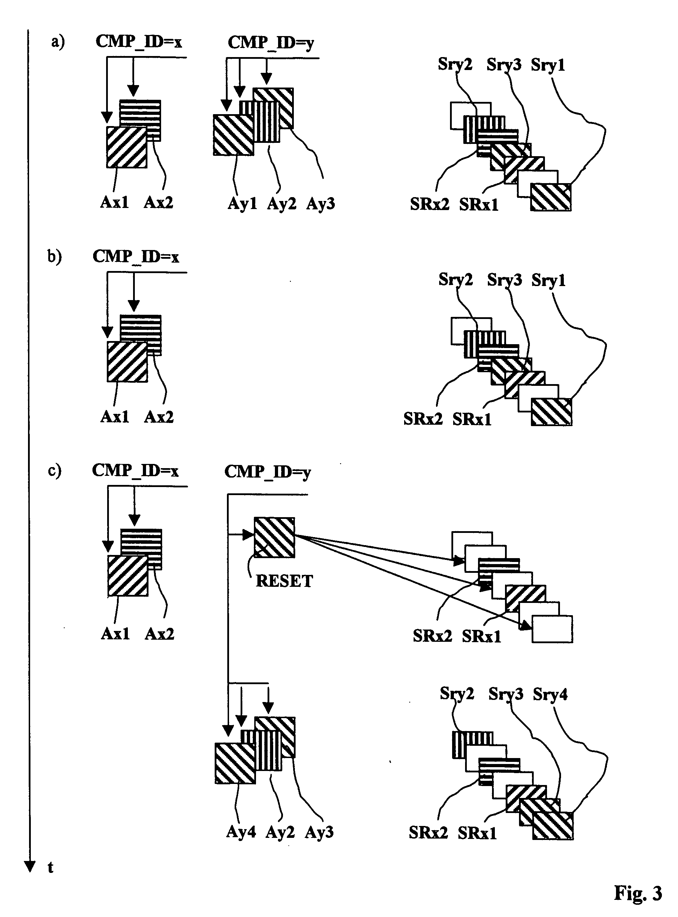

Aus Figur 3 ist ein Beispiel für ein Verfahren zu entnehmen, bei dem asynchron arbeitende Systemfunktionen und synchrone Systemfunktionen, die Systemressourcen SR belegen und erst nach einem bestimmten Zeitraum wieder freigeben, nach der an sich bekannten zuvor beschriebenen Art prinzipiell einen erfindungsgemäßen Aktualparameter, hier z. B. CMP_ID genannt, erhalten. Der Aktualparameter CMP_ID repräsentiert z. B. eine Teilanlage des Automatisierungssystems AS und ist mit den dort belegten Systemressourcen SR logisch verknüpft. Hier ist ein erstes Teilprogramm im jeweils linken Teil der Darstellung mit Auslösebausteinen Ax1 und Ax2 und dem Aktualparameter CMP_ID=x sowie ein zweites, jeweils rechts daneben gezeigtes Teilprogramm mit Auslösebausteinen Ay1, Ay2 und Ay3 und dem Aktualparameter CMP_ID=y vorhanden. Auch diese Auslösebausteine belegen, vergleichbar mit der Beschreibung anhand der Figur 2a, 2b, die entsprechenden Systemressourcen SRx1, SRx2 und SRy1, SRy2 und SRy3 nach der Aktion a) aus der Figur 3.

Mit der Aktion b) aus der Figur 3 wird das zweite Teilprogramm gelöscht und das erste Teilprogramm läuft weiter, wobei aber alle zuvor genannten Systemressourcen belegt bleiben.

Aus der Aktion c) der Figur 3 soll symbolisch zu entnehmen sein, dass das zweite Teilprogramm modifiziert worden ist und danach mit den Auslösebausteinen Ay2, Ay3 und Ay4 neu geladen wird. Erfindungsgemäß ist nun eine weitere System- bzw. Resetfunktion, die hier mit dem Block RESET angegeben ist und die mindestens einen Eingangsparameter, hier CMP_ID=y, besitzt, vorgesehen. Die Funktion RESET wird nun mit Erkennen des Erstlaufes des zweiten Teilprogramms mit dem Ziel aufgerufen, alle noch nicht beendeten Systemfunktionen bzw. Systemressourcen SRy1, SRy2 und SRy3 mit diesem entsprechenden Aktualparameter CMP_ID freizugeben.

Beim Erstlauf des zweiten Teilprogramms können nun alle mit dem entsprechenden Aktualparameter CMP_ID versehenen Aufträge Ay1, Ay2 und Ay3 fehlerfrei abgearbeitet werden, da das modifizierte zweite Teilprogramm beim Anlauf nicht den letzten Zustand des Vorläuferprogramms und somit auch nicht die aktuell belegten dynamischen Systemressourcen des Vorgängerprogramms kennt. Die erfinderische Funktion dient damit der Synchronisierung der aktuell gültigen Instanz des zweiten Teilprogramms mit den dynamisch belegten Systemressourcen SR des Automatisierungssystems AS.

Die Resetfunktion RESET kann sich speziell auf eine einzelne Systemfunktion beziehen, d. h. jeder Systemfunktion ist eine Resetfunktion RESET zugeordnet, oder es existiert eine Resetfunktion RESET für alle Systemfunktionen des Automatisierungssystems AS, deren Systemressourcen SR zurückzusetzen sind.

Wenn in Automatisierungssystemen AS bereits Systemfunktionen existieren, mit den die zuvor beschriebenen Aktionen durchführbar sind, und es nicht wünschenswert ist, einen separaten neuen Baustein mit gleicher Funktionalität und dem zusätzlichen Aktualparameter CMP_ID zu definieren, kann dieses Problem eventuell auch durch eine so genannte Markierfunktion gelöst werden.

Mit dieser Markierfunktion wird eine logische Verknüpfung zwischen einer auf diese Weise gebildeten CMP_ID und den belegten Systemressourcen SR hergestellt. Diese Funktion besitzt dann mindestens zwei Eingangsparameter; zum einen logischen Bezug zu der belegten Systemressource SR, z. B. einen Adressparameter der Systemfunktion und den Parameter CMP-ID mit der anfangs beschriebenen Funktionalität. Mit dem Starten dieser Systemfunktion wird dann auch die Markierfunktion aufgerufen, die eine logische Verknüpfung zu den belegten Systemressourcen SR herstellt.

Bei den praktischen Ausführungen der hier in Frage kommenden Automatisierungsgeräte existieren in der Regel bereits unterschiedliche Kommunikations- und Meldebausteine als Auslöser, die asynchron arbeiten und dynamisch Systemressourcen SR belegen. Diese Bausteine können sinnvollerweise innerhalb eines Funktionsbausteins des Programms mit einem so genannten Gedächtnis-Instanz-Datenbaustein IDB aufgerufen werden. Aufgrund des Gedächtnisses können diese Bausteine einen Erstlauf nach dem Überladen des Instanz-Datenbausteins IDB erkennen, da innerhalb des Funktionsbausteins die eindeutige Nummer des Instanz-Datenbausteins IDB bekannt ist.

Beispielsweise kann der Anwender diese IDB-Nummer als die zuvor beschriebene CMP_ID verwenden. Nach dem Überladen des zugehörigen Gedächtnis-Instanz-Datenbausteins IDB stellt dann das Anwenderprogramm den Erstlauf dieses Gedächtnis-Instanz-Datenbausteins IDB fest und kann nun die ggf. belegten Systemressourcen SR mit der Resetfunktion RESET und der bekannten CMP_ID = IDB-Nummer freigeben.

In einem konkreten Anwendungsfall mit einem Alarmbaustein in einem Teilprogramm kann z. B. eine Teilanlage als abgesetzter Partner aufgrund einer Störung zum Stillstand kommen. Hierzu werden Alarmmeldungen abgesandt, die aber vom Funktionsverlauf erst dann beendet sind, wenn die Störung beseitigt ist. Das Anwenderprogramm kann nun Auskunft geben, welche Alarmmeldungen bzw. Störungen einer Teilanlage (CMP_ID = Teilanlage) abgesandt und noch nicht beendet worden sind, da die entsprechenden Systemressourcen SR noch belegt sind, wodurch hier die Basis einer schnellen Fehlerbehebung gegeben ist.

## Patentansprüche

1. Verfahren zur Bearbeitung der Programmfunktionen eines Automatisierungssystems (AS), bei dem die einer zu steuernden Anlage (ANL) zugeordneten Teilprogramme und/oder Systemfunktionen (A; A1, A2; Ax1, Ax2, Ay1, Ay2, Ay3, Ay4) Systemressourcen (SR) im Automatisierungssystem (AS) belegen, **dadurch gekennzeichnet, dass** die mit den Teilprogrammen im Betrieb aktivierten Systemfunktionen oder Auslösebausteine (A; A1, A2; Ax1, Ax2, Ay1, Ay2, Ay3, Ay4) einen Aktualparameter (CMP_ID) erhalten, der eine logische Verknüpfung zwischen dem durch das Teilprogramm repräsentierten Teil der Anlage (ANL) mit den im Automatisierungssystem durch die Systemfunktion (A; A1, A2; Ax1, Ax2, Ay1, Ay2, Ay3, Ay4) belegten Systemressourcen (SR) bis zum Beenden der Systemfunktion (A; A1, A2; Ax1, Ax2, Ay1, Ay2, Ay3, Ay4) herstellt, und dass nach einem Erstlauf eines bearbeiteten Teilprogramms alle diesbezüglichen Systemressourcen (SR) im Automatisierungsgerät durch eine Resetfunktion (RESET) freigegeben werden.

2. Verfahren nach Anspruch 1, **dadurch gekennzeichnet, dass** der Aktualparameter (CMP_ID) mit einem separaten Baustein erzeugt wird, der jeweils einer Systemfunktion (A; A1, A2; Ax1, Ax2, Ay1, Ay2, Ay3, Ay4) zugeordnet ist.

3. Verfahren nach Anspruch 1, **dadurch gekennzeichnet, dass** der Aktualparameter (CMP_ID) mit einem separaten Baustein erzeugt wird, der allen Systemfunktionen (A; A1, A2; Ax1, Ax2, Ay1, Ay2, Ay3, Ay4) im Automatisierungsgerät (AS) zugeordnet ist.

4. Verfahren nach einem der vorhergehenden Ansprüche, **dadurch gekennzeichnet, dass** als Aktualparameter (CMP_ID) eine bereits im Automatisierungssystem (AS) vorhandene Systemfunktion herangezogen wird, wobei eine Markierfunktion generiert wird, die eine logische Verknüpfung zwischen der bereits vorhandenen Funktion, dem Teilprogramm und den belegten Systemressourcen (SR) im Automatisierungssystem (AS) herstellt.

5. Verfahren nach einem der vorhergehenden Ansprüche, **dadurch gekennzeichnet, dass** im Automatisierungssystem (AS) eine Auskunftsfunktion generiert wird, mit der der Bearbeitungszustand jeder Systemfunktion oder jedes Auslösebausteins (A; A1, A2; Ax1, Ax2, Ay1, Ay2, Ay3, Ay4) im Betrieb überwacht werden kann und insbesondere alle nicht beendeten Systemfunktionen über den existierenden Aktualparameter (CMP_ID) identifiziert werden.

6. Software- oder Firmware-Baustein zur Durchführung des Verfahrens nach einem der vorhergehenden Ansprüche, **dadurch gekennzeichnet, dass** in dem Software- oder Firmware-Baustein des Automatisierungssystems (AS) ein Programm hinterlegt ist, dessen Programmschritte die Bildung und Auswertung des Aktualparameters (CMP_ID) und der Resetfunktion (RESET) im Automatisierungssystem (AS) durchführen.

7. Vorrichtung zur Durchführung eines Verfahrens oder zum Betrieb mit einem Software- oder Firmware-Baustein nach einem der vorhergehenden Ansprüche, **dadurch gekennzeichnet, dass** mindestens ein programmierbarer Mikroprozessor im Automatisierungssystem (AS) vorhanden ist, mit dem ein synchroner oder asynchroner Datenaustausch zu dezentral abgesetzten Anlagen (ANL) oder Teilanlagen des Automatisierungssystems (AS) und eine Änderung des Programms im Betrieb des Mikroprozessors zur Fehlerüberwachung, bei Wartungsarbeiten oder bei Optimierungsprozeduren durchführbar ist.
